# EUROPÄISCHE PATENTSCHRIFT

(11) **EP 1 921 492 B1**
(45) Veröffentlichungstag und Bekanntmachung des Hinweises auf die Patenterteilung: **07.01.2009**
(21) Anmeldenummer: 07021534.8
(22) Anmeldetag: 06.11.2007
(51) Int. Cl.: G02F 1/1334, G02F 1/1341, G02F 1/1345

(54) **Verfahren zur Herstellung von Flüssigkristallanzeigen**
Method for manufacturing liquid crystal display devices
Procédé de fabrication d'un dispositif d'affichage à cristaux liquides

(30) Priorität: 08.11.2006 DE 102006052606
(43) Veröffentlichungstag der Anmeldung: 14.05.2008
(73) Patentinhaber: Leonhard Kurz Stiftung & Co. KG, 90763 Fürth (DE)
(72) Erfinder: Weiß, Steffen, 90482 Nürnberg (DE); Schindler, Ulrich, Dr., 90762 Fürth (DE)
(74) Vertreter: LOUIS, PÖHLAU, LOHRENTZ

(56) Entgegenhaltungen:
- EP-A- 1 447 706
- EP-A- 1 712 949
- WO-A-01/67170
- WO-A-03/104884

## Beschreibung

Die Erfindung betrifft ein Verfahren zur Herstellung von polymerdispergierten Flüssigkristallanzeigen bzw. PDLCDs (Polymer Dispersed-LCDs), die bspw. in einem Rolle-zu-Rolle-Prozess hergestellt werden sollen.

Die EP 1 447 706 A2 beschreibt ein Verfahren zur Herstellung polymerdispergierter Flüssigkristallanzeigen, wobei in einem ersten Verfahrensschritt auf ein Substrat eine Vielzahl erste Elektroden aufgebracht werden. In einem sich anschließenden zweiten Verfahrensschritt wird auf eine vorgegebene Fläche jeder ersten Elektrode eine Schicht aus Flüssigkristall-Material in Form von Tröpfchen flüssig aufgetragen, so dass ein vorbestimmter Abschnitt jeder ersten Elektrode damit bedeckt ist. Anschließend erfolgt eine Trocknung, so dass sich eine Schicht aus polymerdispergierten Flüssigkristall-Bereichen in einer Matrix bildet. Danach werden eine Vielzahl zweite Elektroden gebildet, die von den ersten Elektroden elektrisch isoliert sind. Durch Anlegen eines elektrischen Feldes zwischen den ersten und zweiten Elektroden ist der optische Zustand des polymerdispergierten Flüssigkristallmaterials veränderbar.

Die EP 1 712 949 A1 beschreibt ein Verfahren zur Herstellung einer Informationsanzeigeeinrichtung, bei welchem ein Anzeigemedium zwischen einem transparenten und einem weiteren Substrat angeordnet wird, welche mit Elektroden ausgestattet sind. Als Anzeigemedium ist hier Flüssigkristall-Material genannt. Eine elektrisch leitende Verbindung zwischen den Substraten wird mittels eines Klebers hergestellt, der elektrisch leitende Distanzpartikel aufweist.

Die Herstellung von PDLCDs in einem Rolle-zu-Rolle-Prozess wird bislang dadurch behindert, dass die Funktionsschicht der jeweiligen PDLCD, die aus einer mit Flüssigkristall-Material (LC-Material) befüllten porösen Polymer- d.h. Stützmatrix besteht, oberflächlich nicht geschlossen ist. Nach dem Aushärten der Matrix liegen die Flüssigkristalle (LCs) in einem nicht vernetzten, flüssigen Zustand vor. Aufgrund der an der Oberfläche der Matrix befindlichen flüssigen Flüssigkristalle (LCs) ist es bislang nicht möglich, einen üblicherweise mehrstufigen Rolle-zu-Rolle-Prozess durchzuführen, weil die Funktionsschicht mit anderen mit ihr in Kontakt gebrachten Oberflächen verkleben würde. Daraus würde eine Beschädigung der Funktionsschicht resultieren.

Deshalb liegt der Erfindung die Aufgabe zugrunde, ein Verfahren der eingangs genannten Art zu schaffen, wobei ein solches Verkleben der Funktionsschicht mit anderen mit ihr in Kontakt gebrachten Oberflächen verhindert und folglich eine Beschädigung der Funktionsschicht vermieden wird.

Diese Aufgabe wird erfindungsgemäß durch die Merkmale des Anspruches 1, d.h. durch die folgenden Verfahrensschritte gelöst:
- Aufbringen einer ersten Kontaktschicht und einer davon durch eine Trennfläche beabstandeten ersten Elektrodenschicht auf einem Grundträger,
- Aufbringen einer elektrisch isolierenden ersten Begrenzungsschicht auf dem Grundträger an der Trennfläche und einer elektrisch isolierenden zweiten Begrenzungsschicht auf der ersten Elektrodenschicht, wobei an der ersten Elektrodenschicht ein Funktionsbereich und eine von der ersten Kontaktschicht abgewandte zweite Kontaktfläche frei bleibt,
- Aufbringen einer Funktionsschicht einer in einer porösen Stützmatrix vorgesehenen polymerdispergierten Flüssigkristall-Mischung im Funktionsbereich zwischen der ersten und der zweiten Begrenzungsschicht und Aushärten der polymerdispergierten Flüssigkristall-Mischung,
- Aufbringen einer Schutzschicht auf die ausgehärtete polymerdispergierte Flüssigkristall-Mischung zwischen der ersten und der zweiten Begrenzungsschicht, und
- Aufbringen einer zweiten Elektrodenschicht auf die Schutzschicht, wobei die zweite Elektrodenschicht an der ersten Kontaktschicht über die Schutzschicht mit einem Überstand übersteht und der Überstand mittels einer leitfähigen Verbindungslage mit der ersten Kontaktschicht kontaktiert wird.

Die erste und die zweite Elektrodenschicht können aufgedruckt, aufgedampft, aufgesputtert, aufgeprägt oder auflaminiert werden. Desgleichen ist es möglich, die beiden Elektroden aus einem elektrisch leitfähigen Gewebe, wie bspw. einem Metallgewebe, zu bilden. Die beiden Elektroden können transparent, nicht transparent oder semitransparent sein. Es ist auch möglich, dass eine Elektrode transparent und die andere Elektrode nicht transparent oder semitransparent ist. Mindestens eine der beiden Elektroden kann auch strukturiert, d.h. bspw. mit einem Muster, einem Hologramm oder dergleichen ausgebildet sein. Wenn beide Elektroden transparent sind, kann auch in einer anderen Schicht der erfindungsgemäßen Flüssigkristallanzeige ein Hologramm oder dergleichen vorgesehen sein.

Mit Hilfe der Schutzschicht wird die Funktionsschicht nach außen hin abgedichtet, so dass das Aufbringen der zweiten Elektrodenschicht auf die Schutzschicht problemlos möglich ist.

Bei dem erfindungsgemäßen Verfahren kann als Schutzschicht eine PEDOT/PSS-Schicht oder eine nicht leitfähige, dünne, filmbildende Schicht verwendet werden. Unabhängig davon, ob eine leitfähige oder eine nicht leitfähige Schutzschicht verwendet wird, kommt es zu einem Verschließen der mit Flüssigkristall (LC)gefüllten Poren der Funktionsschicht aus einer in einer porösen Stützmatrix vorgesehen polymerdispergierten Flüssigkristall-Mischung. Die solchermaßen oberflächlich trockene Funktionsschicht erlaubt die Weiterverarbeitung mit herkömmlichen Prozessen, wie Druckprozessen, Laminierprozessen o. dgl..

Bei dem erfindungsgemäßen Verfahren kann als Grundträger ein flexibler Träger verwendet werden. Desgleichen ist es möglich, dass der Träger nicht flexibel, d.h. formstabil ist. Der Träger kann vollflächig oder teilflächig transparent, semitransparent oder nicht transparent sein. Der Träger kann selbst eine der Elektroden bilden. Bei einer solchen Ausbildung der zuletzt genannten Art ist es erforderlich, vor dem Applizieren der zweiten Elektrode eine elektrische Isolierschicht vorzusehen.

Der Träger kann als Schrumpffolie ausgebildet sein, er kann bedruckt oder unbedruckt sein, er kann - im Falle einer Prägefolie - nur einen Zwischenträger bilden, er kann repliziert oder nicht repliziert sein, er kann selektiv Licht absorbierend usw. sein.

Die erfindungsgemäße Flüssigkristallanzeige kann eine viereckige bzw. rechteckige Grundfläche besitzen oder in jeder beliebigen anderen Grundflächenform ausgebildet sein.

Die zweite Elektrodenschicht kann an einem Deckträger vorgesehen und auf die Schutzschicht auflaminiert sein. Bei dem Deckträger kann es sich - wie bei dem Grundträger - um einen flexiblen Deckträger handeln, so dass es einfach und hochproduktiv möglich ist, das erfindungsgemäße Verfahren in einem Rolle-zu-Rolle-Prozess durchzuführen. Auf diese Weise ist es möglich, polymerdispergierte Flüssigkristallanzeigen kontinuierlich herzustellen.

Weitere Einzelheiten, Merkmale und Vorteile ergeben sich aus der nachfolgenden Beschreibung von in den Zeichnungen dargestellten aufeinanderfolgenden Verfahrensschritten eines Ausführungsbeispieles des erfindungsgemäßen Verfahrens zur Herstellung von polymerdispergierten Flüssigkristallanzeigen.

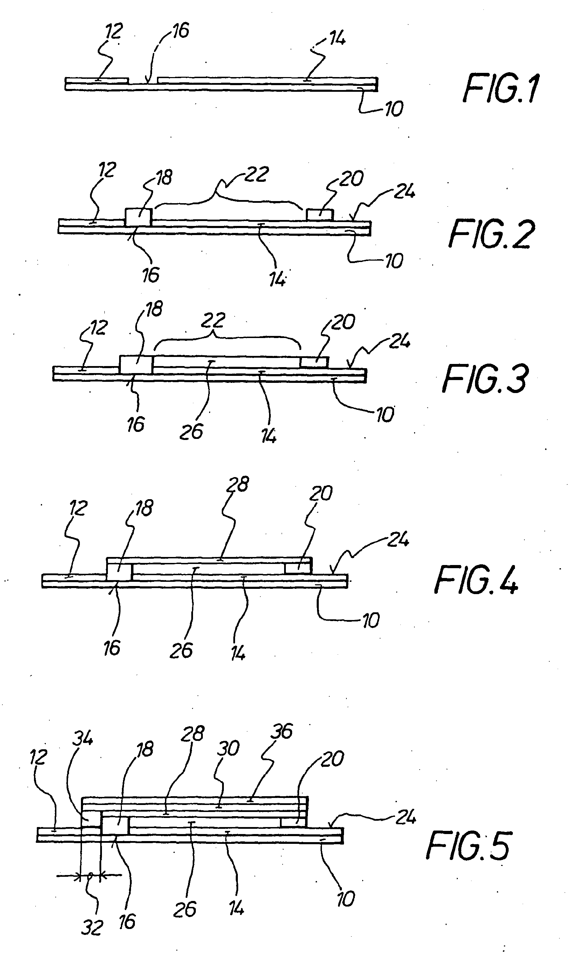

Figur 1 zeigt einen ersten Verfahrensschritt, wobei auf einen Grundträger 10 eine erste Kontaktschicht 12 und eine erste Elektrodenschicht 14 aufgebracht werden, wobei die erste Kontaktschicht 12 und die erste Elektrodenschicht 14 voneinander durch eine Trennfläche 16 getrennt d.h. beabstandet sind.

Bei dem Grundträger 10 kann es sich um einen flexiblen Träger, bspw. um eine Folie aus einem Kunststoffmaterial, handeln. Der Träger kann - wie bereits erwähnt worden ist - auch andere mechanische sowie optische Eigenschaften besitzen.

Nach dem ersten Verfahrensschritt werden in einem anschließenden Verfahrensschritt, wie er in Figur 2 verdeutlicht ist, auf den Grundträger 10 an der Trennfläche 16 eine elektrisch isolierende erste Begrenzungsschicht 18 und auf der ersten Elektrodenschicht 14 eine elektrisch isolierende zweite Begrenzungsschicht 20 aufgebracht, wobei an der ersten Elektrodenschicht 14 zwischen der ersten und der zweiten Begrenzungsschicht 18 und 20 ein Funktionsbereich 22 und eine von der ersten Kontaktschicht 12 abgewandte zweite Kontaktfläche 24 frei bleiben.

Figur 3 verdeutlicht den an den Verfahrensschritt gemäß Figur 2 anschließenden Verfahrensschritt, bei welchem auf dem Funktionsbereich 22 eine Funktionsschicht 26 aus einer in einer porösen Stützmatrix vorgesehenen polymerdispergierten Flüssigkristall-Mischung aufgebracht und getrocknet wird.

In einem an den Verfahrensschritt gemäß Figur 3 anschließenden Verfahrensschritt wird auf die Funktionsschicht 26 aus der in der porösen Stützmatrix vorgesehenen ausgehärteten polymerdispergierten Flüssigkristall-Mischung zwischen der ersten Begrenzungsschicht 18 und der zweiten Begrenzungsschicht 20 eine Schutzschicht 28 aufgebracht. Bei dieser Schutzschicht 28 kann es sich bspw. um eine leitfähige PEDOT/PSS-Schicht oder um eine nicht leitfähige, dünne, filmbildende Schicht handeln. Dieser vierte Verfahrensschritt ist in Figur 4 verdeutlicht.

In einem in Figur 5 dargestellten anschließenden Verfahrensschritt wird auf die Schutzschicht 28 eine zweite Elektrodenschicht 30 aufgebracht, die an der ersten Kontaktschicht 12 über die Schutzschicht 28 mit einem Überstand 32 übersteht. Der Überstand 32 wird mittels einer leitfähigen Verbindungslage 34 mit der ersten Kontaktschicht 12 kontaktiert.

Die zweite Elektrodenschicht 30 kann an einem Deckträger 36 vorgesehen sein und auf die Schutzschicht 28 auflaminiert werden. Bei dem Deckträger 36 kann es sich wie bei dem Grundträger 10 vorzugsweise um einen flexiblen Deckträger werden, so dass es möglich ist, das Verfahren gemäß den Figuren 1 bis 5 in einem Rolle-zu-Rolle-Prozess durchzuführen. Nach Durchführung des besagten Prozesses können der Grundträger 10 und/oder der Deckträger 36 abgelöst werden. Ist die erste Elektrodenschicht 14 lichtundurchlässig, so muss die zweite Elektrodenschicht 30 lichtdurchlässig sein - und vice versa. Desgleichen ist es bspw. möglich, dass beide Elektrodenschichten 14 und 30 lichtdurchlässig sind.

Gleiche Einzelheiten sind in den Figuren 1 bis 5 jeweils mit denselben Bezugsziffern bezeichnet, so dass es sich erübrigt, in Verbindung mit allen Figuren alle Einzelheiten jeweils detailliert zu beschreiben.

## Patentansprüche

1. Verfahren zur Herstellung von polymerdispergierten Flüssigkristallanzeigen umfassend die Verfahrensschritte:
Aufbringen einer ersten Kontaktschicht (12) und einer davon durch eine Trennfläche (16) beabstandeten ersten Elektrodenschicht (14) auf einen Grundträger (10),
Aufbringen einer elektrisch isolierenden ersten Begrenzungsschicht (18) auf den Grundträger (10) an der Trennfläche (16) und einer elektrisch isolierenden zweiten Begrenzungsschicht (20) auf der ersten Elektrodenschicht (14), wobei an der ersten Elektrodenschicht (14) ein Funktionsbereich (22) und eine von der ersten Kontaktschicht (2) abgewandte zweite Kontaktfläche (24) frei bleibt,
Aufbringen einer Funktionsschicht (26) aus einer in einer porösen Stützmatrix vorgesehenen polymerdispergierten Flüssigkristall-Mischung im Funktionsbereich (22) zwischen der ersten und zweiten Begrenzungsschicht (28) und Aushärten der Funktionsschicht (26),
Aufbringen einer Schutzschicht (28) auf die Funktionsschicht (26) zwischen der ersten und der zweiten Begrenzungsschicht (18 und 20), und
Aufbringen einer zweiten Elektrodenschicht (30) auf die Schutzschicht (28), wobei die zweite Elektrodenschicht (30) an der ersten Kontaktschicht (12) über die Schutzschicht (28) mit einem Überstand (32) übersteht und der Überstand (32) mittels einer leitfähigen Verbindungslage (34) mit der ersten Kontaktschicht (12) kontaktiert wird.

2. Verfahren nach Anspruch 1,
**dadurch gekennzeichnet,**
**dass** als Grundträger (10) ein flexibler Träger verwendet wird.

3. Verfahren nach Anspruch 1,
**dadurch gekennzeichnet,**
**dass** für die erste Elektrodenschicht (14) ein PEDOT/PSS- oder ein ITO-Elektrodenmaterial verwendet wird.

4. Verfahren nach Anspruch 1,
**dadurch gekennzeichnet,**
**dass** als Funktionsschicht (26) eine klebrige polymerdispergierte Flüssigkristall-Mischung in einer vernetzten porösen Stützmatrix verwendet wird.

5. Verfahren nach Anspruch 4,
**dadurch gekennzeichnet,**
**dass** die polymerdispergierte Flüssigkristall-Mischung in unterschiedlichen Konzentrationsverhältnissen vorgesehen ist.

6. Verfahren nach Anspruch 1,
**dadurch gekennzeichnet,**
**dass** als Schutzschicht (28) eine PEDOT/PSS-Schicht verwendet wird.

7. Verfahren nach Anspruch 1,
**dadurch gekennzeichnet,**
**dass** als Schutzschicht (28) eine nicht leitfähige, dünne, filmbildende Schicht verwendet wird.

8. Verfahren nach Anspruch 1,
**dadurch gekennzeichnet,**
**dass** die zweite Elektrodenschicht (30) an einem Deckträger (36) vorgesehen ist und auf die Schutzschicht (28) auflaminiert wird.

9. Verfahren nach Anspruch 8,
**dadurch gekennzeichnet,**
**dass** als Deckträger (36) ein flexibler Deckträger verwendet wird.

10. Verfahren nach einem der Ansprüche 1 bis 9,
**dadurch gekennzeichnet,**
**dass** ein Rolle-zu-Rolle-Prozess durchgeführt wird.

## Claims

1. Method for the production of polymer dispersed liquid crystal displays, comprising the method steps of:
applying a first contact layer (12) and a first electrode layer (14), which is spaced apart from said contact layer by a separation area (16), to a base carrier (10),
applying an electrically insulating first delimitation layer (18) to the base carrier (10) at the separation area (16) and an electrically insulating second delimitation layer (20) on the first electrode layer (14), wherein a functional region (22) and a second contact area (24) remote from the first contact layer (2) remain free at the first electrode layer (14),
applying a functional layer (26) composed of a polymer dispersed liquid crystal mixture provided in a porous support matrix in the functional region (22) between the first and second delimitation layers (28), and curing the functional layer (26),
applying a protective layer (28) to the functional layer (26) between the first and second delimitation layers (18 and 20), and
applying a second electrode layer (30) to the protective layer (28), wherein the second electrode layer (30) projects beyond the protective layer (28) with an overhang (32) at the first contact layer (12) and the overhang (32) is contact-connected to the first contact layer (12) by means of a conductive connecting layer portion (34) .

2. Method according to Claim 1,
**characterized**
**in that** a flexible carrier is used as the base carrier (10).

3. Method according to Claim 1,
**characterized**
**in that** a PEDOT/PSS or an ITO electrode material is used for the first electrode layer (14).

4. Method according to Claim 1,
**characterized**
**in that** an adhesive polymer dispersed liquid crystal mixture in a crosslinked porous support matrix is used as the functional layer (26).

5. Method according to Claim 4,
**characterized**
**in that** the polymer dispersed liquid crystal mixture is provided in different concentration ratios.

6. Method according to Claim 1,
**characterized**
**in that** a PEDOT/PSS layer is used as the protective layer (28).

7. Method according to Claim 1,
**characterized**
**in that** a non-conductive, thin, film-forming layer is used as the protective layer (28).

8. Method according to Claim 1,
**characterized**
**in that** the second electrode layer (30) is provided at a cover carrier (36) and is laminated onto the protective layer (28).

9. Method according to Claim 8,
**characterized**
**in that** a flexible cover carrier is used as the cover carrier (36).

10. Method according to any of Claims 1 to 9,
**characterized**
**in that** a roll-to-roll process is carried out.

## Revendications

1. Procédé de fabrication d'un dispositif d'affichage à cristaux liquides à dispersion en polymère comprenant les étapes consistant à :
appliquer une première couche de contact (12) et une première couche d'électrode (14) espacée de celle-ci par une surface de séparation (16) sur un support de base (10),
appliquer une première couche de délimitation électriquement isolante (18) sur le support de base (10) au niveau de la surface de séparation (16) et une deuxième couche de délimitation électriquement isolante (20) sur la première couche d'électrode (14), moyennant quoi, au niveau de la première couche d'électrode (14), une zone de fonction (22) et une deuxième surface de contact (24) espacée de la première couche de contact (2) restent libres,
appliquer une couche de fonction (26) à partir d'un mélange de cristaux liquides à dispersion en polymère prédisposé dans une matrice de support poreuse dans la zone de fonction (22) entre la première et la deuxième zone de délimitation (28) et durcir la couche de fonction (26),
appliquer une couche de protection (28) sur la couche de fonction (26) entre la première et la deuxième couche de délimitation (18 et 20), et
appliquer une deuxième couche d'électrode (30) sur la couche de protection (28), moyennant quoi la deuxième couche d'électrode (30) dépasse de la couche de protection (28) au niveau de la première couche de contact (12) avec une partie en saillie (32) et la partie en saillie (32) est en mise contact avec la première couche de contact (12) au moyen d'une couche de contact conductrice (34).

2. Procédé selon la revendication 1,
**caractérisée en ce**
**que** pour le support de base (10) est utilisé un support flexible.

3. Procédé selon la revendication 1,
**caractérisé en ce**
**que** pour la première couche d'électrode est utilisé un matériau d'électrode PEDOT/PSS ou ITO.

4. Procédé selon la revendication 1,
**caractérisé en ce**
**que** pour la couche de fonction (26) est utilisé un mélange de cristaux liquides à dispersion en polymère dans une matrice de support poreuse réticulée.

5. Procédé selon la revendication 4,
**caractérisé en ce**
**que** le mélange de cristaux liquides à dispersion en polymère est prédisposé dans différents rapports de concentration.

6. Procédé selon la revendication 1,
**caractérisé en ce**
**que** pour la couche de protection (28) est utilisée une couche PEDOT/PSS.

7. Procédé selon la revendication 1,
**caractérisé en ce**
**que** pour la couche de protection (28) est utilisée une couche formant une pellicule mince non conductrice.

8. Procédé selon la revendication 1,
**caractérisé en ce**
**que** la deuxième couche d'électrode (30) est pourvue d'un support de couverture (36) et est laminée sur la couche de protection.

9. Procédé selon la revendication 8,
**caractérisé en ce**
**que** pour le support de couverture (36) est utilisé un support de couverture flexible.

10. Procédé selon l'une des revendications 1 à 9,
**caractérisé en ce**
**qu'**un procédé de roulage.
